(19) Europäisches Patentamt
European Patent Office
Office européen des brevets

(11) **EP 3 514 068 B1**

(12) **EUROPEAN PATENT SPECIFICATION**

(45) Date of publication and mention
of the grant of the patent:
**24.03.2021 Bulletin 2021/12**

(51) Int Cl.:
***B64D 45/00*** *(2006.01)*      ***G01P 5/00*** *(2006.01)*
***G01S 17/58*** *(2006.01)*

(21) Application number: **17850479.1**

(22) Date of filing: **28.04.2017**

(86) International application number:
**PCT/JP2017/016992**

(87) International publication number:
**WO 2018/051572 (22.03.2018 Gazette 2018/12)**

(54) **AIRCRAFT SPEED INFORMATION PROVIDING SYSTEM, SPEED INFORMATION PROVIDING METHOD, AND PROGRAM**

SYSTEM ZUR BEREITSTELLUNG VON FLUGZEUGGESCHWINDIGKEITSINFORMATIONEN, VERFAHREN ZUR BEREITSTELLUNG VON GESCHWINDIGKEITSINFORMATIONEN UND PROGRAMM

SYSTÈME DE FOURNITURE D'INFORMATIONS DE VITESSE D'AÉRONEF, PROCÉDÉ DE FOURNITURE D'INFORMATIONS DE VITESSE, ET PROGRAMME

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.09.2016 JP 2016179268**

(43) Date of publication of application:
**24.07.2019 Bulletin 2019/30**

(73) Proprietor: **Japan Aerospace Exploration Agency Tokyo 182-8522 (JP)**

(72) Inventors:
• **MATAYOSHI, Naoki**
  **Chofu-shi, Tokyo 182-8522 (JP)**
• **IIJIMA, Tomoko**
  **Chofu-shi, Tokyo 182-8522 (JP)**
• **ENTZINGER, Jorg Ono**
  **Tokyo 113-8654 (JP)**
• **UEMURA, Tsuneharu**
  **Tokyo 113-8654 (JP)**
• **SUZUKI, Shinji**
  **Tokyo 113-8654 (JP)**

(74) Representative: **Michalski Hüttermann & Partner Patentanwälte mbB Speditionstraße 21 40221 Düsseldorf (DE)**

(56) References cited:
**EP-A1- 2 365 343**      **JP-A- 2010 217 077**
**JP-A- 2012 103 050**      **JP-A- 2016 164 060**
**US-A- 5 070 458**      **US-A1- 2013 311 013**

## Description

Technical Field

The present invention relates to an aircraft speed information providing system, a speed information providing method, and a program for providing speed information on an predicted airspeed, a target airspeed, and the like considering influence of remote turbulence in front of an aircraft.

Background Art

An aircraft speed indication generally includes a target airspeed indication called "selected speed" or "speed bug", a predicted airspeed indication called "speed trend vector", and the like. In general, the target airspeed is speed information provided complying with aircraft performance limits, objectives, instructions from the control, regulations of airline companies, and regulations during flight.

Further, the predicted airspeed is information on a predicted speed to be given several seconds later (e.g., ten seconds later), which is calculated on the basis of information on increase/decrease in aircraft speed (see Non-Patent Literature 1). For maintaining a constant speed, a pilot conducts a thrust operation for reducing the speed if the predicted airspeed tends to increase ten seconds later or for increasing the speed if the predicted airspeed tends to decrease ten seconds later. Further, the pilot conducts a manual thrust operation such that the aircraft has a target airspeed. Alternatively, not relying on pilot's manual operations, an automatic thrust control device (e.g., auto throttle or the like) can also automatically control thrust so as to obtain a target airspeed.

Citation List

Patent Literature

Patent Literature 1: Japanese Patent Application Laid-open No. 2010-217077
Patent Literature 2: Japanese Patent Application Laid-open No. 2015-056055
Patent Literature 3: Japanese Patent Application Laid-open No. 2012-103050
Patent Literature 4: European Patent Application EP 2 365 343 A1
Patent Literature 5: US-Patent Application US 2013/311013 A1

Patent Literature 1 describes a remote airflow warning display technology for aircraft. It is mounted on an aircraft that radiates a laser beam into the atmosphere and receives the scattered light of the laser beam in the atmosphere to measure the wind speed in a remote region from several hundred meters to about 10 km based on the Doppler effect.

Patent Literature 3 describes a remote eddy detection method, in particular, by radiating a laser beam into the atmosphere and receiving the scattered light of the laser beam in the atmosphere, the wind speed in a remote region from several hundred meters to about 10 km is Doppler. It describes a remote eddy detection method that measures based on the effect and detects turbulence, and a device that implements the remote eddy detection method.

Patent Literature 4 describes an air data sensor that measures an airspeed, an angle of attack, a sideslip angle, and turbulence in an airborne device that measures a wind velocity in a distant region at a distance of several tens of meters to about 1 km on the basis of a Doppler effect by emitting a laser light into the atmosphere and receiving a scattered light produced by scattering of the laser light in the atmosphere,

Patent Literature 5 describes an aerodynamic state estimator, and more specifically a measurement assisted aerodynamic state estimator.

Non-Patent Literature

Non-Patent Literature 1: Instrument Flying Handbook (FAA-H-8083-15A, 6-26)
Non-Patent Literature 2: "Operational Evaluation of Low Level Turbulence Advisory System" (51st Aircraft Symposium, JSASS-2013-5174, November 2013, Kagawa) by Tomoko Iijima, Naoki Matayoshi, and Eiichi Yoshikawa
Non-Patent Literature 3: "Development and Evaluation of Airport Low level Wind Information" (53rd Aircraft Symposium, 2G03, November 2015, Matsuyama) by Tomoko Iijima, Naoki Matayoshi, Eiji Fujita, and Kentaro Yamamoto

Disclosure of Invention

Technical Problem

However, in general, influence of turbulence (remote turbulence) in front of an aircraft is not considered in calculating a predicted airspeed and a target airspeed given to the aircraft, and thus the predicted airspeed and the target airspeed given to the aircraft have errors at least corresponding thereto. For that reason, if the airspeed of the aircraft suddenly changes due to the influence of the turbulence when the pilot tries to enter a runway at a target airspeed determined by the pilot for landing, for example, the pilot may have to conduct a go-around. More specifically, there is a case where the headwind changes into the tailwind while losing the altitude and the airspeed is lowered to approach the stall speed. In such a case, a go-around is conducted.

Also in thrust control based on the target airspeed by the automatic thrust control device, there is a possibility that an error corresponding to influence due to a turbulence change may be included.

A remote turbulence measurement device such as a Doppler lidar and a Doppler radar is known as means for measuring turbulence. For example, there is known a method of measuring turbulence by the Doppler lidar in order to provide the pilot with an alarm indication regarding a situation where wind suddenly changes like severe wind shear (see Patent Literature 1). However, in a manner that depends on a situation where turbulence fluctuates, there are not a few cases where it becomes difficult to control the airspeed of the aircraft so as to correspond to the turbulence fluctuation even without alarm and a go-around is conducted.

Further, there is known a technology of notifying an aircraft of remote turbulence information via a data link from a sensor (e.g., Doppler radar for airport weather, Doppler lidar for airport weather, etc.) that is placed on the ground and measures remote turbulence (e.g., Patent Literature 2). However, regarding that system, it has been reported that there is a delay of about ten minutes from turbulence measurement to information provision (Non-Patent Literature 2) and it has also been reported that an actual turbulence state is different from information (Non-Patent Literature 3).

In view of the above-mentioned circumstances, it is an object of the present invention to provide an aircraft speed information providing system, a speed information providing method, and a program, by which stable airspeed control considering remote turbulence can be realized.

Solution to Problem

The invention is defined by the features of the independent claims. Preferred embodiments are defined by the features of the dependent claims.

In order to solve the above-mentioned problem, an aircraft speed information providing system according to an embodiment of the present invention includes: an airspeed measurement device that measures a present airspeed of an aircraft; an acceleration measurement device that measures present acceleration of the aircraft; a remote turbulence measurement device that is installed in the aircraft and measures remote turbulence in front of the aircraft; and a computation processing device that calculates a predicted airspeed of the aircraft on the basis of the measured present airspeed and present acceleration and the remote turbulence measured by the remote turbulence measurement device.

In the present invention, the predicted airspeed considering the remote turbulence in front of the aircraft can be calculated. By providing the pilot with this predicted airspeed, the pilot can select a manual throttle operation for optimal thrust control for maintaining a target speed while considering the predicted airspeed considering the remote turbulence in front of the aircraft.

The computation processing device may be configured to further calculate a variation amount of the predicted airspeed.

By providing the pilot with the information on the predicted airspeed including the variation amount, the pilot can select a manual throttle operation for more optimal thrust control for maintaining a target speed while considering the predicted airspeed including the variation amount.

The computation processing device may be configured to calculate the predicted airspeed and the variation amount at each of a plurality of times.

By providing the pilot with information on the predicted airspeed and the variation amount at each of the plurality of times, the pilot can select a manual throttle operation for more optimal thrust control for maintaining a target reference speed while considering a change in predicted airspeed and the variation amount between the plurality of times.

Further, the computation processing device may be configured to cause a cockpit instrument to display the calculated predicted airspeed and variation amount.

The computation processing device may be configured to generate a warning notification when the predicted airspeed considering the calculated variation amount is within a warning region.

The speed management burden on the pilot can be lightened and the safety can be enhanced.

The computation processing device may be configured to calculate a target airspeed on the basis of a difference between the calculated predicted airspeed and present airspeed, the calculated variation amount, and a reference speed such as a reference speed by pilot setting.

By providing the pilot with the target airspeed, for example, the pilot can select a more optimal manual throttle operation for maintaining the reference speed by the pilot setting while considering the target airspeed considering the remote turbulence.

The computation processing device may be configured to calculate the target airspeed while considering a configuration of the aircraft.

In addition, the computation processing device may be configured to cause the cockpit instrument to display the calculated target airspeed.

Further, the computation processing device may be configured to calculate control data for automatic thrust control on the basis of the calculated target airspeed.

By outputting this control data to the automatic thrust control device, more stable automatic thrust control considering the remote turbulence in front of the aircraft is realized.

An aircraft speed information providing method according to another embodiment of the present invention includes: by a computation processing device installed in an aircraft, inputting data on remote turbulence in front of an aircraft measured by a remote turbulence measurement device installed in the aircraft; and calculating a predicted airspeed of the aircraft on the basis of the data on the remote turbulence and respective data on a present airspeed and acceleration of the aircraft.

A program according to another embodiment of the present invention causes a computer to operate as a computation processing device that inputs data on remote turbulence in front of an aircraft measured by a remote turbulence measurement device installed in the aircraft, and calculates a predicted airspeed of the aircraft on the basis of the data on the remote turbulence and respective data on a present airspeed and acceleration of the aircraft.

Advantageous Effects of Invention

As described above, in accordance with the present invention, it is possible to provide an aircraft speed information providing system, a speed information providing method, and a program, by which stable airspeed control considering remote turbulence can be realized.

Brief Description of Drawings

[Fig. 1] A block diagram showing an entire configuration of an aircraft speed information providing system 1 according to an embodiment of the present invention.
[Fig. 2] A diagram showing a flow of entire computation processing by a computation processing device 4 in the speed information providing system 1 of Fig. 1.
[Fig. 3] A diagram showing a flow of L-PSPD raw data calculation processing (S10) of Fig. 2.
[Fig. 4] A diagram for describing a calculation method for a predicted airspeed in the L-PSPD raw data calculation processing (S10) of Fig. 2.
[Fig. 5] A diagram for describing a calculation method for a variation amount of a predicted airspeed in the L-PSPD raw data calculation processing (S10) of Fig. 2.
[Fig. 6] A diagram showing a flow of L-TSPD raw data calculation processing (S20) of Fig. 2.
[Fig. 7] A diagram showing a flow of processing regarding display and warning from the L-PSPD raw data in L-PSPD & L-TSPD provision data calculation processing in Fig. 2.
[Fig. 8] A diagram showing a flow of display processing and warning processing for L-TSPD information based on L-TSPD raw data in the L-PSPD & L-TSPD provision data calculation processing of Fig. 2.
[Fig. 9] A diagram showing an example of primary flight display including a display symbol of L-PSPD information and L-TSPD information.
[Fig. 10] An enlarged diagram of a predicted airspeed indicator 11 and a predicted speed symbol group 13 in the primary flight display of Fig. 9.
[Fig. 11] A block diagram showing an entire configuration of a typical aircraft predicted airspeed information providing system (e.g., speed trend vector).

Mode(s) for Carrying Out the Invention

Hereinafter, an embodiment of the present invention will be described.

An aircraft speed information providing system of this embodiment is a system capable of providing the pilot and the automatic thrust control device with speed information on a predicted airspeed to be given several seconds to several tens of seconds later, a target airspeed, and the like, for example, considering remote turbulence in front of an aircraft.

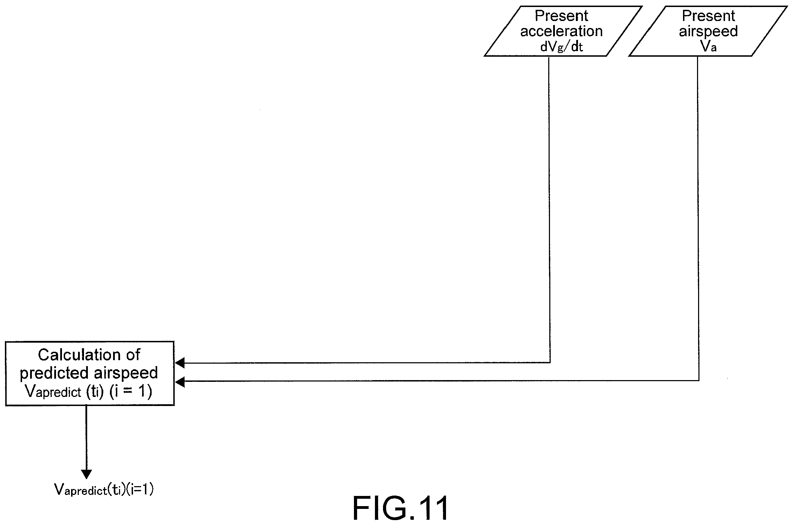

Fig. 11 is a block diagram showing a typical method of generating the speed information on the predicted airspeed given several seconds to several tens of seconds later and the like. In this typical method, on the basis of a present airspeed $V_a$ and present $dV_g/d_t$, the computation processing device calculates, for example, a predicted airspeed $V_{apredict}$ $(t_i)$ $(i = 1)$ at a time $(t_i)$ determined in a range of several seconds to several tens of seconds. In accordance with this method, a calculation result includes an error at least corresponding to influence of the remote turbulence in front of the aircraft, which is not considered. The aircraft speed information providing system of this embodiment can at least overcome such an error, which is one of effects.

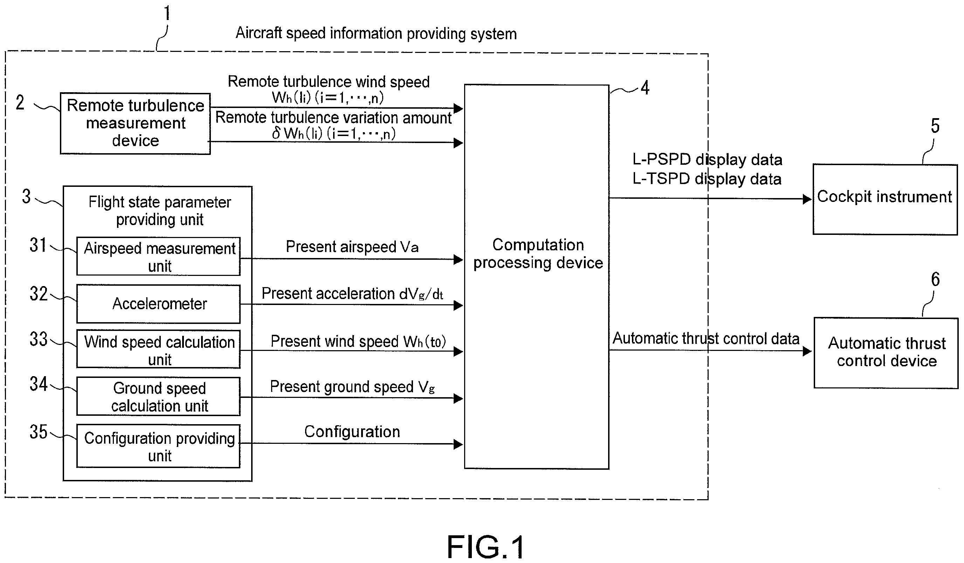

Fig. 1 is a block diagram showing an entire configuration of the aircraft speed information providing system 1 of this embodiment.

As shown in the figure, this aircraft speed information providing system 1 includes a remote turbulence measurement device 2, a flight state parameter providing unit 3, and a computation processing device 4.

The remote turbulence measurement device 2 is a device that measures a wind speed and a direction of a direction component along the aircraft axis in the remote turbulence in front of the aircraft. More specifically, the remote turbulence measurement device 2 is a Doppler lidar or the like. The Doppler lidar is capable of emitting (transmitting) laser light as a transmission signal into the atmosphere, receiving scattered laser light of the laser light due to aerosol in the atmosphere as a reception signal, and measuring turbulence in a remote region at approximately several km to several tens of km in front, for example, on the basis of a Doppler shift amount between the transmission signal and the reception signal.

It should be noted that in the present invention, the remote turbulence measurement device 2 is not limited to the Doppler lidar and may be another type of turbulence sensor. Further, it is not limited to the type installed in the aircraft and may acquire turbulence data through a data link from a turbulence sensor placed on the ground or a turbulence sensor installed in another aircraft.

The remote turbulence measurement device 2 generates data on a wind speed mean value in an aircraft axis direction and the like for each different distance ($l_i$) (i = 1, ..., n) as wind speed data $W_h$ ($l_i$) (i = 1, ..., n) of the remote turbulence at each distance on the basis of the measured turbulence data. The remote turbulence measurement device 2 outputs it to the computation processing device 4 in real time. For example, provided that an entire measurement distance is 6 km, the distance of 6 km is divided into a range of a distance ($l_1$) of 0 to 2 km, a range of a distance ($l_2$) of 2 km to 4 km, and a range of a distance ($l_3$) of 4 km to 6 km. A wind speed mean value and the like, for example, in each distance range are generated as wind speed data $W_h$ ($l_i$) (i = 1, 2, 3) of the remote turbulence at each distance ($l_i$) (i = 1, 2, 3). Those are output to the computation processing device 4 in real time. Here, each distance range does not necessarily need to be the same.

Further, the remote turbulence measurement device 2 generates wind speed variation amount data $\delta W_h$ ($l_i$) (i = 1, ..., n) of the remote turbulence at each distance ($l_i$) (i = 1, ..., n) and outputs it to the computation processing device 4 in real time. The wind speed variation amount data $\delta W_h$ ($l_i$) (i = 1, ..., n) indicates, for example, a standard deviation of a variation amount of the wind speed of the remote turbulence in the aircraft axis direction, which is measured within a target distance range.

The flight state parameter providing unit 3 includes various measurement devices, calculation devices, and the like that measure various parameters (flight state parameters) indicating a state of the aircraft during flight and output them to the computation processing device 4. The flight state parameter providing unit 3 includes an airspeed measurement unit 31, an accelerometer 32, a wind speed calculation unit 33, a ground speed calculation unit 34, a configuration providing unit 35, and the like. The airspeed measurement unit 31 is a device that measures a present airspeed $V_a$ of the aircraft. The accelerometer 32 is a device that measures present acceleration $dV_g/d_t$ of the aircraft. The wind speed calculation unit 33 is a device that measures a present wind speed $W_h$ ($l_0$) in the aircraft axis direction, which is experienced by the aircraft. The ground speed calculation unit 34 is a device that calculates a present ground speed $V_g$ of the aircraft by using global positioning system (GPS) information and the like, for example. The configuration providing unit 35 is a device that provides information on a configuration such as present gear state, flap state, weight, and the like of the aircraft.

The computation processing device 4 includes a control unit, a storage unit, an input unit, an output unit, a transmission and reception unit, and the like. The control unit includes a central processing unit (CPU) and the like. By operating in accordance with software developed in the storage unit, the control unit executes various types of computation processing such as processing of calculating a predicted airspeed and processing of calculating a target airspeed. The storage unit includes a read only memory (ROM) and a random access memory (RAM). The transmission and reception unit transmits and receives data to/from the respective devices 31 to 35 inside the remote turbulence measurement device 2 and the flight state parameter providing unit 3.

The computation processing device 4 is configured to perform computation processing as follows on the basis of the wind speed data $W_h$ ($l_i$) (i = 1, ..., n) of the remote turbulence at each distance and the wind speed variation amount data $\delta W_h$ ($l_i$) (i = 1, ..., n) at each distance, which are input by the remote turbulence measurement device 2, and the flight state parameters provided by the respective devices 31 to 35 inside the flight state parameter providing unit 3.

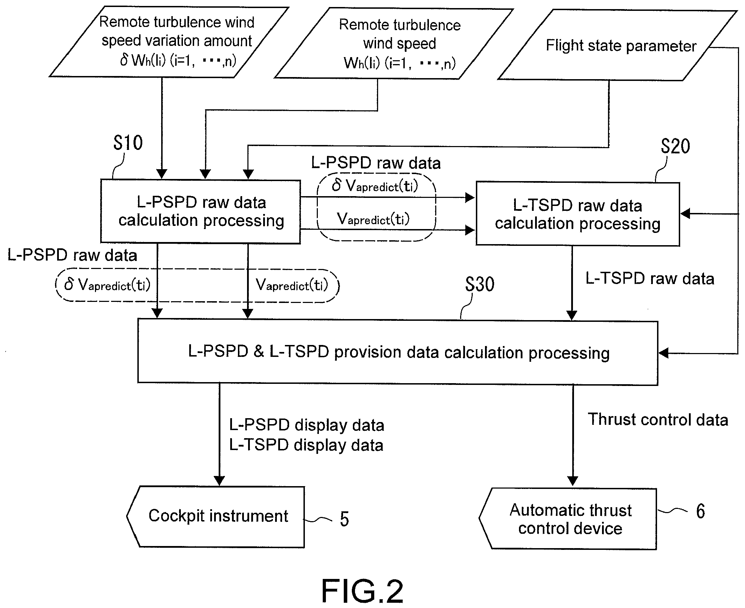

Fig. 2 is a diagram showing a flow of entire computation processing by the computation processing device 4.

Main computation processing performed in the computation processing device 4 includes L-PSPD raw data calculation processing (S10), L-TSPD raw data calculation processing (S20), and L-PSPD & L-TSPD provision data calculation processing (S30).

L-PSPD Raw Data Calculation Processing (S10)

On the basis of the wind speed data $W_h$ ($l_i$) (i = 1, ..., n) of the remote turbulence at each distance and the wind speed variation amount data $\delta W_h$ ($l_i$) (i = 1, ..., n) at each distance, which are input by the remote turbulence measurement device 2, and the flight state parameters provided by the flight state parameter providing unit 3, the computation processing device 4 calculates a predicted airspeed $V_{apredict}$ ($t_i$) (i = 1, ..., n) at each time ($t_i$) (i = 1, ..., n) corresponding to each distance ($l_i$) (i = 1, ..., n) and a variation amount thereof $\delta V_{apredict}$ ($t_i$) (i = 1, ..., n). Here, information on the calculated predicted airspeed and variation amount thereof is called "L-PSPD raw data". The L-PSPD is an abbreviation of a lidar-predictive speed.

L-TSPD Raw Data Calculation Processing (S20)

The computation processing device 4 calculates a target airspeed on the basis of the L-PSPD raw data calculated in the above-mentioned L-PSPD raw data calculation processing (S10) and the flight state parameters provided by the flight state parameter providing unit 3. Here, the calculated target airspeed is called "L-TSPD raw data". The L-TSPD is an abbreviation of a lidar-target speed.

L-PSPD & L-TSPD Providing Data Calculation Processing (S30)

The computation processing device 4 performs processing of displaying, on a cockpit instrument 5, the L-PSPD raw data calculated in the above-mentioned L-PSPD raw data calculation processing (S10) and the L-TSPD raw data calculated in the above-mentioned L-TSPD raw data calculation processing (S20), processing of notifying a pilot of a warning via the cockpit instrument 5 when the L-PSPD raw data is within the warning region, processing of calculating thrust control data to be output to an automatic thrust control device 6 by using the L-TSPD raw data, and the like.

Next, each type of the above-mentioned processing (S10), (S20), and (S30) will be described in detail.

(Details of L-PSPD Raw Data Calculation Processing)

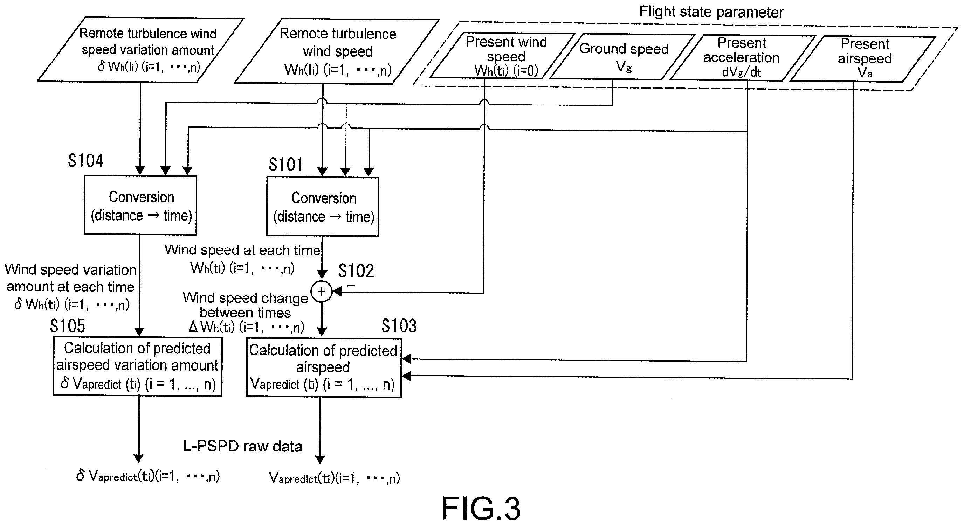

Fig. 3 is a diagram showing a flow of the L-PSPD raw data calculation processing (S10).

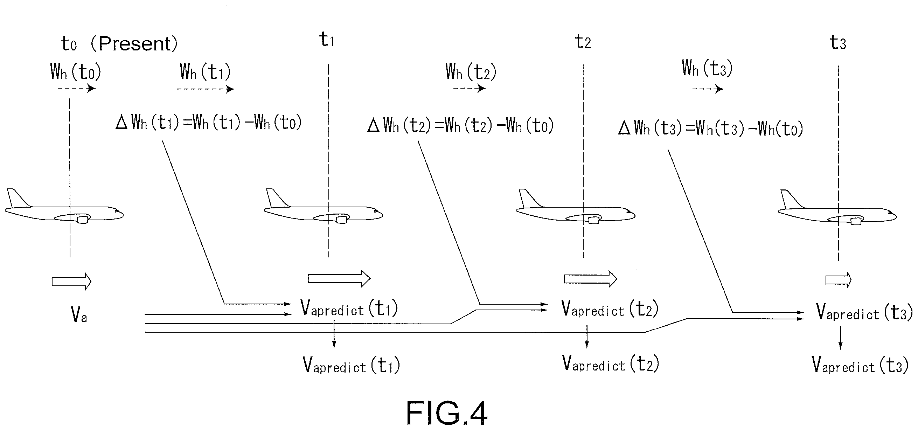

Fig. 4 is a diagram for describing a calculation method for a predicted airspeed in the L-PSPD raw data calculation processing (S10).

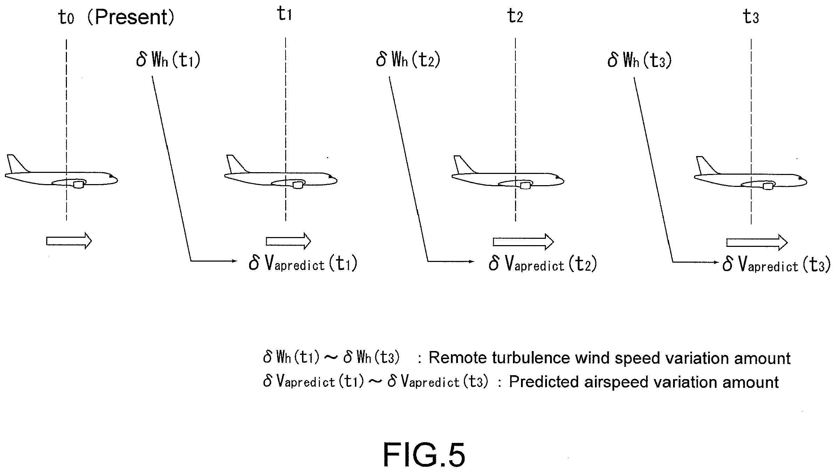

Fig. 5 is a diagram for describing a calculation method for a variation amount of a predicted airspeed in the L-PSPD raw data calculation processing (S10).

(Calculation of Predicted Airspeed)

As shown in Fig. 3, the computation processing device 4 inputs the wind speed data $W_h (l_i)$ (i = 1, ..., n) of the remote turbulence in each distance range from the remote turbulence measurement device 2. Next, the computation processing device 4 converts the input wind speed data $W_h (l_i)$ (i = 1, ..., n) of the remote turbulence in each distance range into wind speed data $W_h (t_i)$ (i = 1, ..., n) at each time (S101 in Fig. 3). In order to perform this distance-to-time conversion, the computation processing device 4 inputs present ground speed data $V_g$ and present acceleration data $dV_g/d_t$ through the flight state parameter providing unit 3 and calculates a time $(t_i)$ (i = 1, ..., n) when the aircraft reaches a point at each distance $(l_i)$ (i = 1, ..., n) described above on the basis of that data.

As shown in Fig. 4, a case of calculating a predicted airspeed $V_{apredict} (t_i)$ (i = 1, 2, 3) at each of three times will be considered.

On the basis of the converted wind speed data $W_h (t_i)$ (i = 1, 2, 3) at each time and present wind speed data $W_h (t_0)$ input from the flight state parameter providing unit 3, the computation processing device 4 determines a wind speed change $\Delta W_h (t_i)$ (i = 1, 2, 3) between the times (S102 in Fig. 3). Here, it is assumed that a wind speed change from a present time $(t_0)$ to the time $(t_i)$ is $\Delta W_h (t_1)$, a wind speed change from the time $(t_0)$ to the time $(t_2)$ is $\Delta W_h (t_2)$, and a wind speed change from the time $(t_0)$ to the time $(t_3)$ is $\Delta W_h (t_3)$.

Next, on the basis of present airspeed data $V_a$ input by the flight state parameter providing unit 3 and the present acceleration data $dV_g/d_t$ and a wind speed change $\Delta W_h (t_1)$, the computation processing device 4 calculates a predicted airspeed $V_{apredict} (t_1)$ at the time $(t_1)$ (S103 in Fig. 3). For example, in a case where the present wind speed data $W_h (t_0)$ is 5 kt in a tailwind direction and a wind speed data $W_h (t_1)$ of the remote turbulence at the time $(t_1)$ is 8 kt in the tailwind direction, the wind speed change $\Delta W_h (t_1)$ between the present time $(t_0)$ to the time $(t_1)$ is an "increase by 3 kt in the tailwind direction". In this case, for example, a result of addition or subtraction of the wind speed change $\Delta W_h (t_1)$ to/from the predicted airspeed at the time $(t_1)$, which is calculated on the basis of the present airspeed $V_a$, the present acceleration $dV_g/d_t$, and the like without considering the remote turbulence may be the predicted airspeed $V_{apredict} (t_1)$ at the time $(t_1)$.

Also regarding the time $(t_2)$, the computation processing device 4 uses a result of addition or subtraction of the wind speed change $\Delta W_h (t_2)$ to/from the predicted airspeed at the time $(t_2)$, which is calculated on the basis of the present airspeed $V_a$, the present acceleration $dV_g/d_t$, and the like without considering the remote turbulence, as a predicted airspeed $V_{apredict} (t_2)$ at the time $(t_2)$. In this manner, the predicted airspeed $V_{apredict} (t_i)$ (i = 1, ..., n) at each time, which considers influence of the remote turbulence, is calculated.

(Calculation of Variation Amount of Predicted Airspeed)

The computation processing device 4 inputs the wind speed variation amount data $\delta W_h (l_i)$ (i = 1, ..., n) of the remote turbulence at each distance through the remote turbulence measurement device 2. The computation processing device 4 converts data on the input wind speed variation amount $\delta W_h (l_i)$ (i = 1, ..., n) of the remote turbulence at each distance into data on wind speed variation amount data $\delta W_h (t_i)$ (i = 1, ..., n) at each time $(t_i)$ (i = 1, ..., n) (Step S104 of Fig. 3). In order to perform this distance-to-time conversion, the computation processing device 4 inputs the present ground speed data $V_g$ of the aircraft and the present acceleration data $dV_g/d_t$ of the aircraft through the flight state parameter providing unit 3 and calculates a time $(t_i)$ (i = 1, ..., n) when the aircraft reaches a point at each distance $(l_i)$ (i = 1, ..., n) described above on the basis of that data.

The computation processing device 4 obtains the converted wind speed variation amount data $\delta W_h (t_i)$ (i = 1, ..., n) of the remote turbulence at each time as predicted airspeed variation amount data $\delta V_{apredict} (t_i)$ (i = 1, ..., n) at each time (Step S105 of Fig. 3). For example, as shown in Fig. 5, for calculating the predicted airspeed $V_{apredict} (t_i)$ (i = 1, 2, 3) at each of three times, the computation processing device 4 sets wind speed variation amount data $\delta W_h (t_1)$ of the remote turbulence of the time $(t_0)$ to the time $(t_1)$ as predicted airspeed variation amount data $\delta V_{apredict}(t_1)$ at the time $(t_1)$, sets wind speed variation amount data $\delta W_h (t_2)$ of the remote turbulence from the time $(t_1)$ to the time $(t_2)$ as predicted airspeed variation amount data $\delta V_{apredict} (t_2)$ at the time $(t_2)$, and sets wind

speed variation amount data $\delta W_h$ ($t_3$) of the remote turbulence from the time ($t_2$) to the time ($t_3$) as predicted airspeed variation amount data $\delta V_{apredict}$ ($t_3$) at the time ($t_3$).

(Details of L-TSPD Raw Data Calculation Processing)

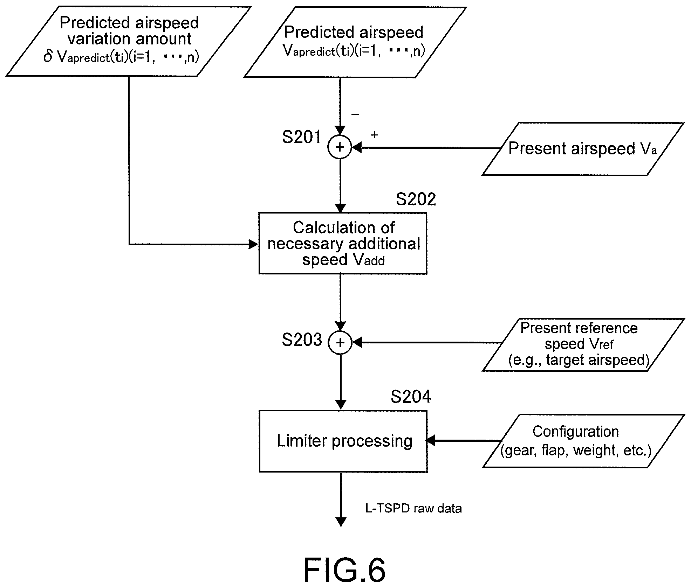

Fig. 6 is a diagram showing a flow of the L-TSPD raw data calculation processing (S20) of Fig. 3.

The computation processing device 4 compares the predicted airspeed $V_{apredict}$ ($t_i$) (i = 1, ..., n) at each time in the L-PSPD raw data calculated in the L-PSPD raw data calculation processing (S10) with the present airspeed $V_a$ provided from the flight state parameter providing unit 3 (S201 in Fig. 6). Next, the computation processing device 4 calculates necessary additional speed $V_{add}$ on the basis of the respective comparison results and the variation amount of the predicted airspeed $\delta V_{apredict}$ ($t_i$) (i = 1, ..., n) at the corresponding time calculated in the L-PSPD raw data calculation processing (S10) (S202 in Fig. 6). More specifically, if the predicted airspeed $V_{apredict}$ ($t_i$) (i = 1, ..., n) is lower than the present airspeed $V_a$, a value obtained by adding the variation amount of the predicted airspeed $\delta V_{apredict}$ (ti) (i = 1, ..., n) to a speed difference between the present airspeed $V_a$ and the predicted airspeed $V_{apredict}$ ($t_i$) (i = 1, ..., n) is set as the necessary additional speed $V_{add}$ which is positive.

It should be noted that information to be used for calculation of the additional speed $V_{add}$ may be the predicted airspeeds $V_{apredict}$ ($t_i$) (i = 1, ..., n) and the amounts of fluctuation $\delta V_{apredict}$ ($t_i$) (i = 1, ..., n) at all the times or may be the predicted airspeed $V_{apredict}$ ($t_i$) and the variation amount $\delta V_{apredict}$ ($t_i$) at any one or more times.

Next, the computation processing device 4 subjects the determined additional speed $V_{add}$ to limiter processing with upper and lower limit values determined in accordance with a present configuration of the aircraft (e.g., gear, flap, aircraft weight, etc.) (not shown).

Next, the computation processing device 4 adds the additional speed $V_{add}$ subjected to the limiter processing to a reference speed $V_{ref}$ according to pilot setting and the like of a present target airspeed, for example (S203 in Fig. 6).

The computation processing device 4 subjects the above-mentioned result of addition to the limiter processing with the upper and lower limit values determined in accordance with the present configuration of the aircraft (e.g., gear, flap, aircraft weight, etc.) and sets the result thereof as the target airspeed (L-TSPD raw data).

(Details of L-PSPD & L-TSPD Providing Data Calculation Processing)

Next, the L-PSPD & L-TSPD provision data calculation processing of calculating data available by the cockpit instrument 5 and the automatic thrust control device 6 on the basis of the L-PSPD raw data and L-TSPD raw data calculated in the above-mentioned manner will be described in detail.

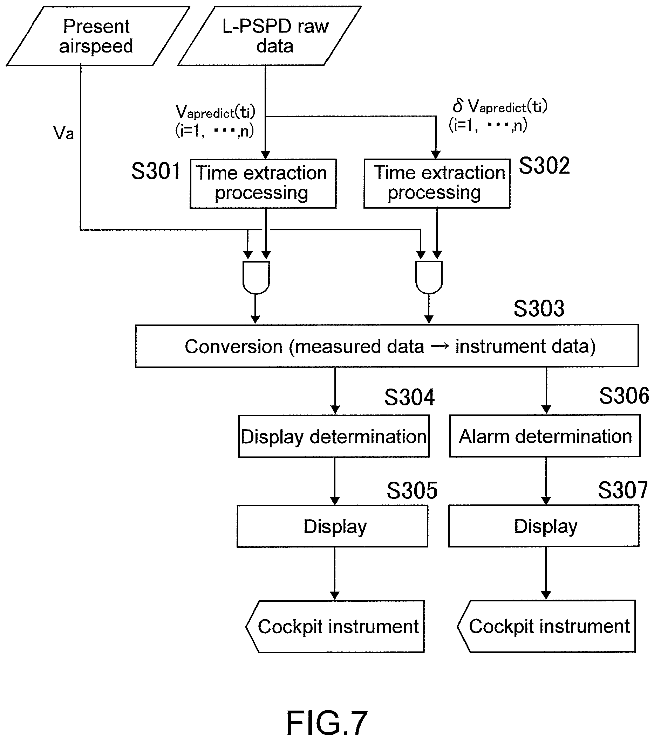

Fig. 7 is a diagram showing a flow of processing regarding display and warning of the L-PSPD raw data.

The computation processing device 4 extracts each piece of data at a common time on the basis of the predicted airspeed $V_{apredict}$ ($t_i$) and the variation amount $\delta V_{apredict}$ ($t_i$) at each time ($t_i$) (i = 1, ..., n), which are the L-PSPD raw data (S301 and S302 in Fig. 7). The computation processing device 4 converts the extracted data into data in a format that can be handled by the cockpit instrument 5 (S303 in Fig. 7).

Next, the computation processing device 4 determines whether a predetermined condition for the converted data to be displayed by the cockpit instrument 5 is satisfied (S304 in Fig. 7). The computation processing device 4 causes a primary flight display which is a main device of the cockpit instrument 5 to display the L-PSPD information if that displaying condition (S305 in Fig. 7).

It should be noted that the fact that a mean value of a difference between the predicted airspeed $V_{apredict}$ ($t_i$) (i = 1, ..., n) at each time and the present airspeed $V_a$ is equal to or higher than a threshold or the like can be exemplified as the condition for displaying the L-PSPD information, though the L-PSPD information may be constantly displayed with no conditions without setting the threshold.

Further, regarding warning processing of the predicted airspeed, if the computation processing device 4 determines that the predicted airspeed $V_{apredict}$ ($t_i$) considering the variation amount $\delta V_{apredict}$ ($t_i$), for example, either one of a minimum predicted airspeed $V_{apredict}$ ($t_i$) or a maximum predicted airspeed $V_{apredict}$ ($t_i$) considering the variation amount $\delta V_{apredict}$ ($t_i$) is within the warning region (S306 in Fig. 7), control is performed to perform a warning notification to the pilot via the cockpit instrument 5 (S307 in Fig. 7). The warning notification may be visually performed via a display of the cockpit instrument 5 and may also be performed with sounds. For example, the computation processing device 4 performs control to perform the warning notification if the minimum predicted airspeed $V_{apredict}$ ($t_i$) considering the variation amount $\delta V_{apredict}$ ($t_i$) is lowered and enters the warning region determined in accordance with the configuration of the aircraft (gear, flap, weight, etc.)

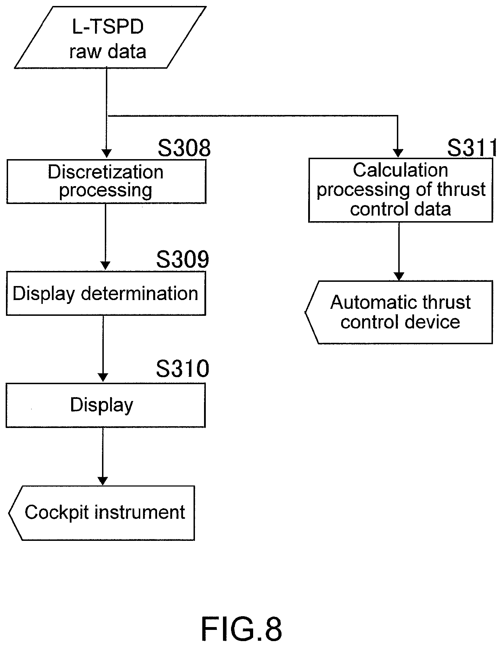

Fig. 8 is a diagram showing a flow of display processing and warning processing of the L-TSPD information, which are based on the L-TSPD raw data.

First of all, the computation processing device 4 performs discretization processing on the L-TSPD raw data (S308). This processing is performed as follows, for example.

$$L\text{-}TSPD = \text{round} (L\text{-}TSPD/\Delta TSPD) * \Delta TSPD$$

Here, round is conversion processing into an integer value by rounding off.

ΔTSPD is a resolution for discretization.

Next, the computation processing device 4 determines whether the predetermined condition for the discretized L-TSPD to be displayed by the cockpit instrument 5 is satisfied (S309). This determination is performed on the basis of whether Condition 1 below or two conditions of Conditions 1 and 2 are satisfied, for example.

> Condition 1: the fact that an absolute value of a difference between the L-TSPD and a target speed of the pilot setting is equal to or larger than a threshold.
> Condition 2: the fact that regarding the predicted airspeed $V_{apredict}$ ($t_i$) and variation amount $\delta V_{apredict}$ ($t_i$) used for calculation of the additional speed $V_{add}$, either one of the predicted airspeed $V_{apredict}$ ($t_i$) + 2 * the variation amount $\delta V_{apredict}$ ($t_i$) or the predicted airspeed $V_{apredict}$ ($t_i$) - 2 * the variation amount $\delta V_{apredict}$ ($t_i$) is larger than the set upper limit value or is lower than the set lower limit value.

If determining that the above-mentioned two conditions are satisfied, the computation processing device 4 causes the primary flight display which is the main device of the cockpit instrument 5 to display the L-TSPD information (S310).

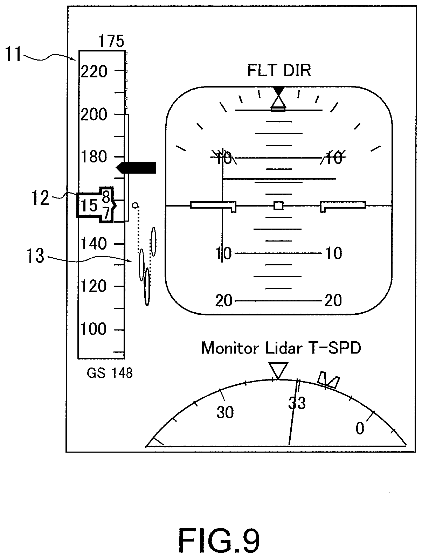

Fig. 9 is a diagram showing an example of the primary flight display including the display symbol of the L-PSPD information and the L-TSPD information.

An airspeed indicator 11, in which higher speeds are assigned to upper height positions and which is also called speed tape, is arranged in the primary flight display. An indicator 12 of the present airspeed $V_a$ is arranged at a middle height position of the airspeed indicator 11. In the example shown in the figure, the present airspeed $V_a$ is between 157 kt to 158 kt. The predicted speed symbol group 13 indicating the predicted airspeed ($t_i$) (i = 1, ..., n) and the variation amount thereof $\delta V_{apredict}$ ($t_i$) (i = 1, ..., n) at each time is arranged near the airspeed indicator 11.

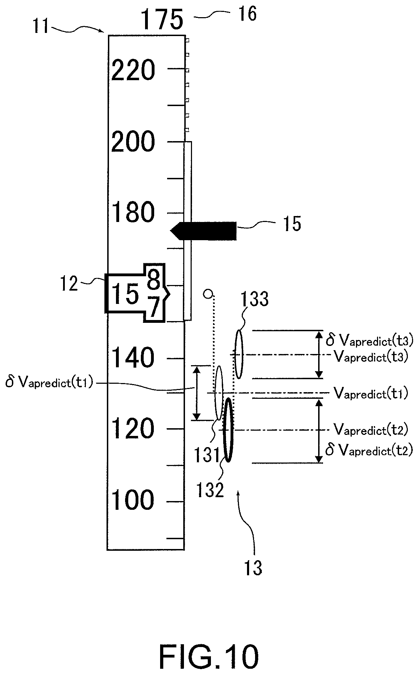

Fig. 10 is an enlarged diagram of the airspeed indicator 11 and the predicted speed symbol group 13 in the primary flight display.

Here, the predicted speed symbol group 13 includes predicted speed symbols 131, 132, and 133 at respective times ($t_i$) (i = 1, 2, 3). That is, the predicted speed symbol 131 indicates the predicted airspeed $V_{apredict}$ ($t_i$) and the variation amount $\delta V_{apredict}$ ($t_1$) at the time ($t_1$), the predicted speed symbol 132 indicates the predicted airspeed $V_{apredict}$ ($t_2$) and the variation amount $\delta V_{apredict}$ ($t_2$) at the time ($t_2$), and the predicted speed symbol 133 indicates the predicted airspeed $V_{apredict}$ ($t_3$) and the variation amount $\delta V_{apredict}$ ($t_3$) at the time ($t_3$).

A length in a speed axis direction of the airspeed indicator 11 of the respective predicted speed symbols 131, 132, and 133 indicates the variation amount $\delta V_{apredict}$ ($t_i$) and the position on the speed axis of the airspeed indicator 11 at a middle height of the predicted speed symbols 131, 132, and 133 indicates the predicted airspeed $V_{apredict}$ ($t_i$). The predicted speed symbols 131, 132, and 133 has a shape easy to check the middle height at a glance, for example, a vertically-long elliptical shape or the like. The horizontal positions of those three predicted speed symbols 131, 132, and 133 correspond to the times. A horizontal position closer to the airspeed indicator 11 indicates that it is closer to the present time.

The respective predicted speed symbols 131, 132, and 133 may be displayed with a display format, for example, line color, line type, thickness, texture, and the like changed. For example, predetermined color, line type, thickness, and texture may be assigned for each of the predicted speed symbols in an order from the predicted speed symbol at the time closer to the present time.

Further, if the speed enters a region corresponding to a stall speed, a never-exceed speed, or the like, it may be displayed with the color changed for warning or attracting attention.

Further, a target speed symbol 15 indicating the target airspeed and a speed value 16 thereof are displayed on the airspeed indicator 11. The example of the figure indicates that the target airspeed is 175 kt.

(Application to Automatic Thrust Control)

In addition, as shown in Fig. 8, the computation processing device 4 calculates thrust control data on the basis of the target airspeed (L-TSPD raw data) on an automatic operation mode and provides it to the automatic thrust control device 6 (S311). With this, automatic thrust control considering the remote turbulence is realized.

As described above, in the speed information providing system 1 of this embodiment, the remote turbulence in front of the aircraft information measured by the remote turbulence measurement device 2 mounted on the aircraft is given to the computation processing device 4 in real time. The computation processing device 4 calculates the predicted airspeed to be given several seconds to several tens of seconds later and the target airspeed by using the remote turbulence information thereof and provides it to the pilot via the cockpit instrument 5. While considering the predicted airspeed to be given several seconds to several tens of seconds later and the target airspeed, the pilot can select a manual throttle operation of optimal thrust control for maintaining a target speed. For example, the pilot can know that there is a possibility that the airspeed of the aircraft may be lowered due to a sudden change of the turbulence, in particular, a change from the headwind to the tailwind during landing approach, several seconds to several tens of seconds before it happens. Therefore, it becomes possible to reduce the number of times a go-around should be performed, for example.

Further, in the speed information providing system 1 of this embodiment, by causing the primary flight display which is the main instrument of the cockpit instrument 5 to display the information on the predicted airspeed and the target airspeed and causing it to display the predicted speed symbol group 13 indicating the predicted airspeed and the target speed symbol 15 indicating the target airspeed while adjusting them to the speed axis of the airspeed indicator 11, the pilot can instantly know a high/low relationship between the present airspeed and the predicted airspeed to be given several seconds to several tens of seconds later and the target airspeed and can quickly select an optimal manual throttle operation.

Further, in the speed information providing system 1 of this embodiment, the information on the predicted airspeed including the variation amount is displayed as the predicted speed symbols 131, 132, and 133. Therefore, the pilot can select a manual throttle operation for optimal thrust control while considering the variation amount of the predicted airspeed.

In addition, in the speed information providing system 1 of this embodiment, the information on the predicted airspeeds including the variation amounts at the plurality of times is displayed as the predicted speed symbol group 13 at the same time. Therefore, the manual throttle operation for optimal thrust control can be selected while considering changes in predicted airspeeds including the variation amounts at the plurality of times.

In addition, in the speed information providing system 1 of this embodiment, the pilot can be given with a visual or audio warning when the predicted airspeed considering the variation amount enters the warning region. Therefore, the speed management burden on the pilot can be lightened and the safety can be improved.

In addition, in the speed information providing system 1 of this embodiment, stable automatic thrust control considering the remote turbulence is realized by calculating the thrust control data on the basis of the target airspeed on an automatic operation mode and providing it to the automatic thrust control device 6.

In addition, the present technology is not limited only to the above-mentioned embodiment and various modifications can be made within the scope defined in the appended claims.

Reference Signs List

| 1 | speed information providing system |
| 2 | remote turbulence measurement device |
| 3 | flight state parameter providing unit |
| 4 | computation processing device |
| 5 | cockpit instrument |
| 6 | automatic thrust control device |
| 11 | airspeed indicator |
| 13 | predicted speed symbol group |
| 15 | target speed symbol |
| 31 | airspeed measurement unit |
| 32 | accelerometer |
| 33 | wind speed calculation unit |
| 33 | ground speed calculation unit |
| 33 | wind speed measurement unit |
| 34 | ground speed calculation unit |
| 35 | configuration providing unit |
| 131, 132, 133 | predicted speed symbol |

**Claims**

1. An aircraft speed information providing system (1), comprising:

   an airspeed measurement device (31) that measures a present airspeed of an aircraft;
   an acceleration measurement device (32) that measures present acceleration of the aircraft;
   a remote turbulence measurement device (2) that is installed in the aircraft and measures remote turbulence in front of the aircraft; and
   a computation processing device (4) that is configured to calculate a predicted airspeed of the aircraft on a basis of the measured present airspeed and present acceleration and the remote turbulence measured by the remote turbulence measurement device (2), wherein
   the computation processing device (4) is configured to further calculate a variation amount of the predicted airspeed and
   to calculate a target airspeed on a basis of a difference between the calculated predicted airspeed and present airspeed, the calculated variation amount, and a reference speed.

2. The aircraft speed information providing system according to claim 1, wherein
   the computation processing device is configured to calculate the predicted airspeed and the variation amount at each of a plurality of times.

3. The aircraft speed information providing system according to claim 1 or 2, wherein
   the computation processing device is configured to cause a cockpit instrument to display the calculated predicted airspeed and variation amount.

4. The aircraft speed information providing system according to any one of claims 1 to 3, wherein
   the computation processing device is configured to generate a warning notification when the predicted airspeed considering the calculated variation amount is within a warning region.

5. The aircraft speed information providing system according to any one of claims 1 to 4, wherein
the computation processing device is configured to
calculate the target airspeed while considering a
configuration of the aircraft.

6. The aircraft speed information providing system according to any one of claims 1 to 5, wherein
the computation processing device is configured to
cause the cockpit instrument to display the calculated target airspeed.

7. The aircraft speed information providing system according to any one of claims 1 to 6, wherein
the computation processing device is configured to
calculate control data for automatic thrust control on
a basis of the calculated target airspeed.

8. An aircraft speed information providing method,
comprising:

by a computation processing device (4) installed
in an aircraft,
inputting data on remote turbulence in front of
an aircraft measured by a remote turbulence
measurement device (2) installed in the aircraft;
calculating a predicted airspeed of the aircraft
on a basis of the data on the remote turbulence
and respective data on a present airspeed and
acceleration of the aircraft;
calculating a variation amount of the predicted
airspeed; and
calculating a target airspeed on a basis of a difference between the calculated predicted airspeed and present airspeed, the calculated variation amount, and a reference speed.

9. A program that causes a computer to operate as
a computation processing device (4) that

inputs data on remote turbulence in front of an
aircraft measured by a remote turbulence measurement device (2) installed in the aircraft, and
calculates a predicted airspeed of the aircraft on
a basis of the data on the remote turbulence and
respective data on a present airspeed and acceleration of the aircraft, wherein

the computation processing device (4) calculates a
variation amount of the predicted airspeed and calculates a target airspeed on a basis of a difference
between the calculated predicted airspeed and
present airspeed, the calculated variation amount,
and a reference speed.

**Patentansprüche**

1. System (1) zum Bereitstellen von Flugzeuggeschwindigkeitsinformation, mit:

einer Fluggeschwindigkeitsmesseinrichtung
(31), die eine aktuelle Fluggeschwindigkeit eines Flugzeugs misst;
einer Beschleunigungsmesseinrichtung (32),
die eine aktuelle Beschleunigung des Flugzeugs misst;
einer Einrichtung (2) zum Messen entfernter
Turbulenzen, die im Flugzeug installiert ist und
entfernte Turbulenzen vor dem Flugzeug misst;
und
einer Rechenverarbeitungseinrichtung (4), die
dafür konfiguriert ist, eine vorhergesagte Fluggeschwindigkeit des Flugzeugs auf der Basis
der gemessenen aktuellen Fluggeschwindigkeit
und der aktuellen Beschleunigung und der
durch die Einrichtung (2) zum Messen entfernter
Turbulenzen gemessenen entfernten Turbulenzen zu berechnen,
wobei die Rechenverarbeitungseinrichtung (4)
dafür konfiguriert ist, ferner ein Änderungsmaß
der vorhergesagten Fluggeschwindigkeit zu berechnen und
eine Soll-Fluggeschwindigkeit auf der Basis einer Differenz zwischen der berechneten vorhergesagten Fluggeschwindigkeit und der aktuellen Fluggeschwindigkeit, dem berechneten Änderungsmaß und einer Referenzgeschwindigkeit zu berechnen.

2. System nach Anspruch 1, wobei
die Rechenverarbeitungseinrichtung dafür konfiguriert ist, die vorhergesagte Fluggeschwindigkeit und
das Änderungsmaß zu jedem von mehreren Zeitpunkten zu berechnen.

3. System nach Anspruch 1 oder 2, wobei
die Rechenverarbeitungseinrichtung dafür konfiguriert ist, zu veranlassen, dass ein Cockpitinstrument
die berechnete vorhergesagte Fluggeschwindigkeit
und das Änderungsmaß anzeigt.

4. System nach einem der Ansprüche 1 bis 3, wobei
die Rechenverarbeitungseinrichtung dafür konfiguriert ist, eine Warnmeldung zu erzeugen, wenn die
vorhergesagte Fluggeschwindigkeit unter Berücksichtigung des berechneten Änderungsmaßes innerhalb eines Warnbereichs liegt.

5. System nach einem der Ansprüche 1 bis 4, wobei
die Rechenverarbeitungseinrichtung dafür konfiguriert ist, die Soll-Fluggeschwindigkeit unter Berücksichtigung einer Konfiguration des Flugzeugs zu berechnen.

6. System nach einem der Ansprüche 1 bis 5, wobei
die Rechenverarbeitungseinrichtung dafür konfiguriert ist, zu veranlassen, dass das Cockpitinstrument die berechnete Soll-Fluggeschwindigkeit anzeigt.

7. System nach einem der Ansprüche 1 bis 6, wobei die Rechenverarbeitungseinrichtung dafür konfiguriert ist, Steuerdaten für eine automatische Schubsteuerung auf der Basis der berechneten Soll-Fluggeschwindigkeit zu berechnen.

8. Verfahren zum Bereitstellen von Fluggeschwindigkeitsinformation, mit den Schritten:

Eingeben von Daten über entfernte Turbulenzen vor einem Flugzeug, die durch eine im Flugzeug installierte Einrichtung (2) zum Messen entfernter Turbulenzen gemessen werden; Berechnen einer vorhergesagten Fluggeschwindigkeit des Flugzeugs auf der Basis der Daten über die entfernten Turbulenzen und der jeweiligen Daten über eine aktuelle Fluggeschwindigkeit und Beschleunigung des Flugzeugs; Berechnen eines Änderungsmaßes der vorhergesagten Fluggeschwindigkeit; und Berechnen einer Soll-Fluggeschwindigkeit auf der Basis einer Differenz zwischen der berechneten vorhergesagten Fluggeschwindigkeit und der aktuellen Fluggeschwindigkeit, dem berechneten Änderungsmaß und einer Referenzgeschwindigkeit

durch eine in einem Flugzeug installierte Rechenverarbeitungseinrichtung (4).

9. Programm, das einen Computer veranlasst, zu arbeiten als

eine Rechenverarbeitungseinrichtung (4), die Daten über entfernte Turbulenzen vor einem Flugzeug eingibt, die durch eine im Flugzeug installierte Einrichtung (2) zum Messen entfernter Turbulenzen gemessen werden, und eine vorhergesagte Fluggeschwindigkeit des Flugzeugs auf der Basis der Daten über die entfernten Turbulenzen und jeweiliger Daten über eine aktuelle Fluggeschwindigkeit und Beschleunigung des Flugzeugs berechnet, wobei die Rechenverarbeitungseinrichtung (4) ein Änderungsmaß der vorhergesagten Fluggeschwindigkeit berechnet und eine Soll-Fluggeschwindigkeit auf der Basis einer Differenz zwischen der berechneten vorhergesagten Fluggeschwindigkeit und der aktuellen Fluggeschwindigkeit, dem berechneten Änderungsmaß und einer Referenzgeschwindigkeit berechnet.

**Revendications**

1. Système fournissant des informations sur la vitesse d'un aéronef (1) comprenant :

un dispositif de mesure de vitesse aérodynamique (31) qui mesure une vitesse aérodynamique instantanée d'un aéronef ; un dispositif de mesure d'accélération (32) qui mesure une accélération instantanée de l'aéronef ; un dispositif de mesure du flux d'air à distance (2) qui est installé dans l'aéronef et qui mesure le flux d'air à distance devant l'aéronef ; et un dispositif de traitement informatique (4) qui est conçu pour calculer une vitesse aérodynamique prévisionnelle de l'aéronef sur la base de la vitesse aérodynamique instantanée mesurée et de l'accélération instantanée et du flux d'air à distance mesuré par le dispositif de mesure du flux d'air à distance (2), où le dispositif de traitement informatique (4) est conçu pour en outre calculer une quantité de variation de la vitesse aérodynamique prévisionnelle et calculer une vitesse aérodynamique cible sur la base d'une différence entre la vitesse aérodynamique prévisionnelle calculée et la vitesse aérodynamique instantanée, la quantité de variation calculée et une vitesse de référence.

2. Système fournissant des informations sur la vitesse d'un aéronef selon la revendication 1, dans lequel le dispositif de traitement informatique est conçu pour calculer la vitesse aérodynamique prévisionnelle et la quantité de variation instantanée d'une pluralité d'instants.

3. Système fournissant des informations sur la vitesse d'un aéronef selon la revendication 1 ou la revendication 2, dans lequel le dispositif de traitement informatique est conçu pour amener un instrument du cockpit à afficher la vitesse aérodynamique prévisionnelle et la quantité de variation calculées.

4. Système fournissant des informations sur la vitesse d'un aéronef selon l'une quelconque des revendications 1 à 3, dans lequel le dispositif de traitement informatique est conçu pour générer une notification d'avertissement lorsque la vitesse aérodynamique prévisionnelle tenant compte de la quantité de variation calculée se situe dans une zone d'avertissement.

5. Système fournissant des informations sur la vitesse d'un aéronef selon l'une quelconque des revendications 1 à 4, dans lequel

le dispositif de traitement informatique est conçu pour calculer la vitesse aérodynamique cible tout en tenant compte d'une configuration de l'aéronef.

6. Système fournissant des informations sur la vitesse d'un aéronef selon l'une quelconque des revendications 1 à 5, dans lequel
le dispositif de traitement informatique est conçu pour amener l'instrument du cockpit à afficher la vitesse aérodynamique cible calculée.

7. Système fournissant des informations sur la vitesse d'un aéronef selon l'une quelconque des revendications 1 à 6, dans lequel
le dispositif de traitement informatique est conçu pour calculer des données de commande pour la commande automatique de poussée sur la base de la vitesse aérodynamique cible calculée.

8. Procédé fournissant des informations sur la vitesse d'un aéronef, comprenant :

par un dispositif de traitement informatique (4) installé dans un aéronef,
la saisie de données sur le flux d'air à distance devant un aéronef mesuré par un dispositif de mesure du flux d'air à distance (2) installé dans l'aéronef ;
le calcul d'une vitesse aérodynamique prévisionnelle de l'aéronef sur la base des données sur le flux d'air à distance et de données correspondantes sur une vitesse aérodynamique instantanée et l'accélération de l'aéronef ;
le calcul d'une quantité de variation de la vitesse aérodynamique prévisionnelle ; et
le calcul d'une vitesse aérodynamique cible sur la base d'une différence entre la vitesse aérodynamique prévisionnelle calculée et la vitesse aérodynamique instantanée, la quantité de variation calculée et une vitesse de référence.

9. Programme qui amène un ordinateur à fonctionner comme un dispositif de traitement informatique (4) qui
entre les données sur le flux d'air à distance devant un aéronef mesuré par un dispositif de mesure du flux d'air à distance (2) installé dans l'aéronef, et calcule une vitesse aérodynamique prévisionnelle de l'aéronef sur la base des données sur le flux d'air à distance et de données correspondantes sur une vitesse aérodynamique instantanée et l'accélération de l'aéronef,
dans lequel
le dispositif de traitement informatique (4) calcule une quantité de variation de la vitesse aérodynamique prévisionnelle et calcule une vitesse aérodynamique cible sur la base d'une différence entre la vitesse aérodynamique prévisionnelle calculée et la vitesse aérodynamique instantanée, la quantité de variation calculée et une vitesse de référence.

Aircraft speed information providing system

**1**

**2** — Remote turbulence measurement device

Remote turbulence wind speed $W_h(l_i)$ $(i=1,\cdots,n)$

Remote turbulence variation amount $\delta W_h(l_i)$ $(i=1,\cdots,n)$

**4** — Computation processing device

**3** — Flight state parameter providing unit

**31** — Airspeed measurement unit → Present airspeed $V_a$

**32** — Accelerometer → Present acceleration $dV_g/dt$

**33** — Wind speed calculation unit → Present wind speed $W_h(t_0)$

**34** — Ground speed calculation unit → Present ground speed $V_g$

**35** — Configuration providing unit → Configuration

L-PSPD display data
L-TSPD display data

**5** — Cockpit instrument

Automatic thrust control data

**6** — Automatic thrust control device

# FIG.1

FIG.2

Flight state parameter

| Remote turbulence wind speed variation amount $\delta W_h(l_i)$ $(i=1, \cdots, n)$ | Remote turbulence wind speed $W_h(l_i)$ $(i=1, \cdots, n)$ | Present wind speed $W_h(t_i)$ $(i=0)$ | Ground speed $V_g$ | Present acceleration $dV_g/dt$ | Present airspeed $V_a$ |

S104

Conversion (distance → time)

Wind speed variation amount at each time $\delta W_h(t_i)$ $(i=1, \cdots, n)$

S101

Conversion (distance → time)

Wind speed at each time $W_h(t_i)$ $(i=1, \cdots, n)$    S102

Wind speed change between times $\Delta W_h(t_i)$ $(i=1, \cdots, n)$

$+$ $-$

S105

Calculation of predicted airspeed variation amount $\delta V_{apredict}(t_i)$ $(i = 1, ..., n)$

S103

Calculation of predicted airspeed $V_{apredict}(t_i)$ $(i = 1, ..., n)$

L-PSPD raw data

$\delta V_{apredict}(t_i)(i=1, \cdots, n)$     $V_{apredict}(t_i)(i=1, \cdots, n)$

FIG.3

FIG.4

to (Present)                    t1                        t2                        t3

$\delta W_h(t_1)$                  $\delta W_h(t_2)$            $\delta W_h(t_3)$

$\delta V_{apredict}(t_1)$        $\delta V_{apredict}(t_2)$        $\delta V_{apredict}(t_3)$

$\delta W_h(t_1) \sim \delta W_h(t_3)$ : Remote turbulence wind speed variation amount
$\delta V_{apredict}(t_1) \sim \delta V_{apredict}(t_3)$ : Predicted airspeed variation amount

FIG.5

Predicted airspeed
variation amount
$\delta V_{apredict}(t_i)(i=1, \cdots, n)$

Predicted airspeed
$V_{apredict}(t_i)(i=1, \cdots, n)$

S201

$-$
$+$

Present airspeed $V_a$

S202

Calculation of
necessary additional
speed $V_{add}$

S203

Present reference
speed $V_{ref}$
(e.g., target airspeed)

S204

Limiter processing

Configuration
(gear, flap, weight, etc.)

L-TSPD raw data

FIG.6

FIG.7

L-TSPD
raw data

S308
Discretization
processing

S311
Calculation
processing of thrust
control data

S309
Display determination

Automatic thrust
control device

S310
Display

Cockpit instrument

# FIG.8

FIG.9

FIG.10

EP 3 514 068 B1

Present
acceleration
$dV_g/dt$

Present
airspeed
$V_a$

Calculation of
predicted airspeed
$V_{apredict}$ (ti) (i = 1)

$V_{apredict}(ti)(i=1)$

FIG.11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010217077 A
- JP 2015056055 A
- JP 2012103050 A
- EP 2365343 A1
- US 2013311013 A1

**Non-patent literature cited in the description**

- FAA-H-8083-15A. Instrument Flying Handbook. 6-26
- Operational Evaluation of Low Level Turbulence Advisory System. **TOMOKO IIJIMA ; NAOKI MATAYOSHI ; EIICHI YOSHIKAWA.** 51st Aircraft Symposium, JSASS-2013-5174. November 2013
- Development and Evaluation of Airport Low level Wind Information. **TOMOKO IIJIMA ; NAOKI MATAYOSHI ; EIJI FUJITA ; KENTARO YAMAMO-TO.** 53rd Aircraft Symposium, 2G03. November 2015